Europäisches Patentamt

European Patent Office

Office européen des brevets

(11) Publication number: **0 026 091**
**B1**

(12) **EUROPEAN PATENT SPECIFICATION**

(45) Date of publication of patent specification: 23.05.84

(21) Application number: 80303295.2

(22) Date of filing: 19.09.80

(51) Int. Cl.³: **C 09 C 1/02**, C 09 C 1/42, C 09 C 3/08, D 21 H 3/78, D 21 H 1/22, C 09 C 3/10

(54) **Method for manufacture of sized paper.**

(30) Priority: 25.09.79 AT 6287/79

(43) Date of publication of application:
01.04.81 Bulletin 81/13

(45) Publication of the grant of the patent:
23.05.84 Bulletin 84/21

(84) Designated Contracting States:
DE FR GB SE

(56) References cited:
DE-C- 958 830
GB-A- 919 495
US-A-1 979 380
US-A-2 009 436
US-A-3 773 535
US-A-3 977 894

WORLD SURFACE COATING ABSTRACTS, vol.
50, no. 426, December 1977, publ. by the Paint
Research Assoc., Teddington, Middlesex, GB,
page 1466, abstract nr. 77/7939
RESEARCH DISCLOSURE, No. 152, December
1976, Homewell, Havant, Hampshire, GB, page
20, disclosure no. 15260 (anonymous)

(73) Proprietor: **MOBIL OIL CORPORATION**
150 East 42nd Street
New York New York 10017 (US)

(72) Inventor: **Schuster, Josef**
Hahngasse 8/34
A-1090 Wien (AT)
Inventor: **Geretschlaeger, Maximilian**
Heinestrasse 43/13
A-1020 Wien (AT)

(74) Representative: **West, Alan Harry**
Mobil Court 3 Clements Inn
London WC2A 2EB (GB)

Courier Press, Leamington Spa, England.

## Description

The present invention relates to the production of partly to fully sized paper or carton stock.

For a long time the paper manufacturing industry has used cellulose, mechanical wood pulp, fillers such as kaolin or chalk and rosin sizes as the principal components for paper and carton stock. The size is frequently used because papers often need "sizing", i.e. hydrophobing. This is necessary in order to give writing paper proper ink resistance, to avoid "feathering". Similarly, printing stock should give a clear print with the best possible reproduction of contrast and with the minimum demand for printing ink. Also, for semi-manufactured products, such as base-paper for coating purposes, a limited degree of sizing is required to limit the degree of penetration of size-press preparatory solutions or surface coatings; full sizing is not desirable in this case because, apart from economic considerations, it would lead to a repulsion or separation of the surface treating material. There is therefore a distinction between full and partial sizing, e.g. half, quarter or one-eighth sizing.

Sizing materials which have been used frequently are the rosin sizes, including the partly or fully saponified colophony rosin sizes. These may be reinforced by reaction with maleic acid, maleic anhydride or its derivatives or used as such. In all cases, the pulp of fibrous material is mixed with size-containing fillers, e.g. kaolin or chalk; the sizing materials show an almost exclusive affinity for the fibrous material, leaving the filler practically unchanged.

Because the rosin sizes are expensive it would be desirable to hydrophobe the paper or carton stock with less expensive materials such as waxes. DE—C—958,830 is directed to the treatment of chalk fillers with hydrophobic agents by applying melted wax to the surface of the filler by spraying the wax or simply contacting the filler with the wax which may be in either a solid or liquid state. Research Disclosure, No. 152, December 1976, page 20 discloses polyethylene-coated pigments and fillers produced through the use of a coating agent consisting of a mixture of emulsifiable and non-emulsifiable polyethylene or non-emulsifiable polyethylene alone. GB—A—919,495 teaches the use of paraffin-coated additives for elastomer compositions prepared through the use of cationic wax emulsions.

According to the present invention, there is provided a method for the manufacture of partly to fully sized paper or carton stock in which the filler which is added to the pulp or included in a coating formulation comprises a hydrophobic, wax-coated filler produced by contacting a finely-divided, particulate, inorganic filler material with an aqueous emulsion of wax, the emulsion being anionic, non-ionic or a mixture thereof. The hydrophobic filler can, of course, be used together with rosin sizes for pulp sizing.

The hydrophobed fillers may be used both at the pulp sizing stage and, if desired, in the size press or in a coating formulation. Thus, the invention provides a process for producing partly to fully sized paper or carton stock by making a pulp out of the raw materials for the paper, mixing the pulp with the hydrophobic filler and subsequently processing the pulp or papermaking machinery to obtain the final paper or carton stock. If necessary, the pulp can be sized with suitable sizing materials, e.g. rosin sizes.

The hydrophobed fillers may be prepared simply by mixing an anionic-non-ionic wax emulsion of the appropriate kind with a suspension of the filler. However, the best results can be obtained by selecting favorable concentrations for the wax emulsion and the filler suspension, rates of addition and mixing and separation times. These can be determined empirically for each desired combination of filler and wax emulsion.

The economic benefits of the invention are demonstrated by the fact that it is possible to reduce the amount of sizing material by half (1 part of wax has the same effect as 2 parts of solid rosin).

A further advantage arising from the use of the wax-hydrophobed fillers is that a greater uniformity of sizing is achieved, primarily in the distribution of the filler throughout the paper. In the past, the filler material often tended to become segregated on the wire (screen) side of the pulp web because the filler tended to fall through the pulp while it was still wet, after which it tended to be sucked out of the web by the vacuum under the wire. This tendency is reduced with the hydrophobed fillers of the present invention because the effect of the high specific gravity of the filler, e.g. kaolin is reduced. Thus, the properties of the final paper or carton stock are more even between the two sides. The present fillers also enable more even sizing to be obtained when waste paper is being used. In the past, the different degrees of sizing of waste paper which were encountered in practice led to inconsistencies in sizing when the rosin-sized waste paper was used with unsized fiber. These inconsistencies, in turn, led to repulsion or excessive absorption of the solutions used in the size press preparation or the coating.

In addition, the use of fixatives such as alum can be considerably reduced or even eliminated. If wax-hydrophobed kaolin is used as the filler, no fixative is needed and because the fixative is acid, neutral sizing becomes possible. The previous necessity for adding alum or other fixatives was predicated of course, on the fact that natural rosin in the cellulose or the required additives need the alum or other fixative to fix it to the fibers whereas this necessity is obviated when the hydrophobing agent—the wax—is present on the filler material.

The fillers are made hydrophobic simply by mixing them with an aqueous anionic/non-ionic wax emulsion, generally under turbulent mixing conditions, at room temperature or above for a suitable period of time, e.g. 5 minutes, until the wax is absorbed onto the filler. For economic reasons, the wax should be completely depleted from the water phase of the emulsion.

All the mineral (inorganic) fillers conventionally used by the paper industry are suitable for use in the present process. Such fillers are, for example, kaolin, soapstone, asbestine, gypsum, barium sulfate, magnesium carbonate, chalk, titanium dioxide, mixtures of titanium dioxide and barium sulfate, calcium silicate, mixtures of zinc sulfide and barium sulfate, kieselguhr or mixtures of these materials. Before hydrophobing the filler, it is analyzed, as detailed below for a type of kaolin and a type of chalk:

| | |
|---|---|
| Kaolin type A 3: | |
| Distribution of fractions | >63 $\mu$m 0.02% |
| | 63—40 $\mu$m 0.06% |
| | 40—25 $\mu$m 1.9 % |
| | 25—10 $\mu$m 15.0% |
| | 10—5 $\mu$m 30.0% |
| | 5—2 $\mu$m 25.0% |
| | 2 $\mu$m 28.0% |
| Whiteness  R 46 filter | 77—80% |
| R 457 | 76—79% |
| pH value (10% suspension) | 7—8 |
| Zeta potential | —25 mV |
| Specific surface | 5—6 m$^2$/g |
| Chalk 90 G: | |
| Distribution of fractions | 40 $\mu$m 0.1% |
| | 40—15 $\mu$m 1% |
| | 15—2 $\mu$m 49.0% |
| | 2 $\mu$m 50.0% |
| Whiteness R 457 | 93% |
| pH value | 9.3 |
| Zeta potential | —28 |
| Specific surface | 4 m$^2$/g |

The analysis of the filler material may be used to evaluate the maximum charging capacity of the filler, i.e. the amount of wax that it can take up. In practice, the maximum charging capacity of the filler is determined by the Zeta potential measurement (reduced to —15 mV) and by a dilution test in the laboratory (the water phase is free from wax). For example, the wax-charging capacity for the above-listed types of filler is 6% by weight. Hydrophobing is then done in such a way that the wax emulsion is fed to the filler slurry at room temperature or above in a turbulent system of any kind, so that, after 5 minutes of agitation the water phase must be free from wax. Further treatment is in accordance with conventional procedures.

Factors other than the Zeta potential will also affect the maximum charging capacity of the filler, for example, the particle size and free surface area of the filler, the adsorption characteristics of the filler and the emulsifier system and the solids content of the wax emulsion. It is believed that the filler is hydrophobed by mutual attraction between the charged particles in the wax emulsion and the particles of the filler. Because the interaction of these factors is complicated, the maximum charging capacity of the filler and the optimum conditions for hydrophobing it are best determined empirically by suitable tests, e.g. the dilution test the separation test and the filter test.

The preferred waxes for hydrophobing the fillers are petroleum waxes, i.e. waxes obtained from the refining of crude petroleum. Of these, paraffin wax is the most preferred, although other petroleum waxes, e.g. microcrystalline wax may also be used either alone or, more preferably, in combination with paraffin wax. Various synthetic waxes may also be used, preferably in combination with the petroleum waxes which are relatively cheaper. Suitable synthetic waxes for this purpose are the low molecular weight polyethylenes, e.g. of molecular weight up to about 5000, preferably 1500 to 3000. Emulsions of these materials are generally available, and may be of the anionic or non-ionic types, depending on the nature of the emulsifier, or mixtures of these types, i.e. containing both non-ionic and anionic emulsifiers. Examples of suitable emulsions are as follows.

Anionic/non-ionic type
50—52% by weight of paraffin
1% by wieght of amine
2% by weight of non-ionogenic emulsifying agent
2% by weight stabilizing agent anionic

The wax phase and the water phase are premixed at a temperature below 100°C, then homogenized and immediately chilled down to room temperature.

3

Characteristic features:

| Brookfield viscosity, spindle 3 | 1000 |
| pH, 10% dilution | 8.5 |
| size of particles (μm) | 0.5—3 |

Anionic/non-ionic type:

45—47% by weight of paraffin
4— 5% by weight of micro-crystalline wax
1% by weight of amine
2% by weight of non-ionogenic emulsifying agent
2% by weight of stabilizing agent, anionic

Processing as above.
Characteristic features:

| Brookfield viscosity, spindle 3 | 1500 |
| pH, 10% dilution | 8.5 |
| size of particles (μm) | 0.5—3 |

Anionic/non-ionic type:

46—48% by weight of paraffin
3—5% by weight of polyethylene, molar weight 2000
1.5% by weight of amine
2% by weight of non-ionogenic emulsifying agent
2.5% by weight of stabilizing agent, anionic

For the production of partly sized paper and of semi-manufactured products, such as base paper for coating purposes, it is usually sufficient to use kaolin charged with 1% of solid wax (KH1). The sizing degree to be achieved can be calculated by comparison with conventional rosin sizing. For example, base paper for coating purposes can be produced by conventional procedures using 0.2% solid rosin and 10% filler (both based on absolutely dry fiber), but according to the new procedure, paper of similar quality can be produced with 10% KH1 (absolutely dry fiber) because the effect of 0.1% solid wax equals that of 0.2% solid rosin. If the desired percentage of filler is higher, non-hydrophobic kaolin may be added.

Most of the high-quality, fully-sized papers produced according to today's standards of technology are made from base paper for coating purposes and receive a surface treatment. In the past, these formulations have contained synthetic material, wax dispersions or both, in order to guarantee hydrophobic properties, gloss and smoothness, required dimensional stability and levelness, and above all, good printing qualities. These formulations have to be adjusted for the basic components such as starch or casein, but also to the additional components, such as dyes, brighteners, defoamants and retention aids. They also have to be stable to the shear forces exerted by pumps and to variations of temperature (in the size press), rheological properties and stability of viscosity (for the coating machine), neutral chemical behaviour of the used components and so forth. The hydrophobic fillers of the present invention of appropriate quality (e.g. kaolin for coating purposes, chalk) meet the above requirements as far as formulations of synthetic materials, wax dispersions, or both are concerned because the hydrophobic fillers show the same reactions as the fillers themselves. For this reason, shear forces, rheological behaviour and changes in the viscosity, chemical or physical behaviour of the dispersion are normally of no concern, the qualities that the dispersions should provide being fully imparted to the paper or carton by the wax or the wax components fixed to the filler.

The invention is illustrated by the following examples in which all proportions and percentages are by weight.

Example 1
Use of KH1 (kaolin charged with 1% solid wax). The quantity of rosin size required to obtain full sizing is calculated:
A. For paper requiring 10% of filler and 2% of solid rosin for full sizing by conventional procedures (both based on absolutely dry fiber) requires 10% of KH1 and 1.8% of solid rosin.
B. For paper conventionally, requiring 25% of filler and 2% of solid rosin, 25% by weight of KH1 and 1.5% by weight of solid rosin may be used to effect full sizing.

Example 2
KH6 (kaolin charged with 6% by weight of solid wax in the form of a 60—75% solids content dispersion) is used. The types of paper mentioned in Example 1 can be fully sized as follows:
A. 10% of KH6 (based on solid matter in the slurry) and 0.8% by weight of solid rosin.
B. 16.7% of KH6 (solid matter) and 8.3% of non-treated kaolin.
The above mentioned effective values serve as a basis for all these calculations, according to which 1 part of solid wax substitutes for 2 parts of solid rosin.

Example 3

This Example describes an industrial field test with paper. Offset-paper with ground wood, mill-finished, 90 g/m² fully sized, 11% ash:

|  | With rosin size, fully sized | With KH6 and non-treated kaolin, fully sized |
|---|---|---|
| Whiteness with UV | 90 FS/91SS | 92 FS/91SS |
| Whiteness without UV | 83 FS/83SS | 83 FS/83SS |
| Smoothness Bekk, Sec. | 31 FS/30SS | 37 FS/36SS |
| Stiffness Taber, TU | 2.8 longitudinal direction/ 1.4 cross direction | 3.4 longitudinal direction/ 1.6 cross direction |
| Cobb g/m² | 26.0 FS/25.7SS | 22.4 FS/23.2SS |
| Floating time | 2 minutes | 4 minutes |

Example 4

This Example describes an industrial field test with carton stock. Preparation of the carton stock, substitution of rosin size and kaolin by KH1:

|  | Rosin size/ kaolin | KH1 |
|---|---|---|
| Degree of grinding, back-side | 50°SR | 50°SR |
| Weight of coating, back-side | 51 g/m² | 52 g/m² |
| Ashes, back-side | 20.5% | 21.2% |
| Plucking-test by Dennison, back-side | 9 | 9 |
| Cobb 60 sec., back-side | 59 | 32 |

Example 5

Size press preparation (pigmented preliminary coating).
900 kg KH6 (chalk-based)
150 kg 10% starch (e.g. Solamyl—trade mark)
5—10 kg sodium hydroxide, concentrated
200 kg 40% rubber latex
0.5—1 kg defoament

Example 6

Surface coating (Light weight coating)
800 kg KH6 (coating-kaolin based)
150 kg 40% binding agent (acrylate basis)
50 kg 10% starch
600 kg water

**Claims**

1. A method for the manufacture of partly to fully sized paper or carton stock in which the filler which is added to the pulp or included in a coating formulation comprises a hydrophobic, wax-coated filler produced by contacting a finely-divided, particulate, inorganic filler material with an aqueous emulsion of wax, the emulsion being anionic, non-ionic or a mixture thereof.

2. A method according to claim 1 in which the wax comprises a paraffin wax.

3. A method according to claim 1 or 2 in which the inorganic filler material is kaolin or chalk.

4. A method according to claim 1, 2 or 3 in which the filler material is chalk and the wax emulsion is an anionic/non-ionic emulsion.

5. A process according to any preceding claim in which a rosin size is used in addition to the filler in the pulp or the coating formulation.

6. A process according to any preceding claim in which the wax is a mixture of paraffin wax and at least one low molecular weight synthetic wax.

7. A process according to any one of claims 1 to 5 in which the wax is a mixture of paraffin wax and micro-crystalline wax or a mixture of paraffin wax, micro-crystalline wax and polyethylene wax.

**Patentansprüche**

1. Ein Verfahren zur Herstellung eines teilweise oder vollständig geleimten Papier- oder Karton-Materials, bei dem der Füllstoff der der Pulpe zugesetzt wird oder in einer Beschichtungs-Zusammensetzung enthalten ist, einen hydrophoben, wachsüberzogenen Füllstoff umfaßt, der dadurch hergestellt ist, daß man ein feinverteiltes, teilchenförmiges, anorganisches Füllstoffmaterial mit einer wäßrigen Emulsion von Wachs umsetzt, wobei die Emulsion anionisch, nichtionisch oder eine Mischung davon ist.

2. Ein Verfahren nach Anspruch 1, bei dem das Wachs ein Paraffinwachs umfaßt.

5

**0 026 091**

3. Ein Verfahren nach Anspruch 1 oder 2, bei dem das anorganisch Füllstoffmaterial Kaolin oder Kreide ist.

4. Ein Verfahren nach Anspruch 1, 2 oder 3, bei dem das Füllstoffmaterial Kreide ist und die Wachs-Emulsion eine anionisch/nichtionische Emulsion ist.

5. Ein Verfahren nach einem beliebigen vorangehenden Anspruch, bei dem zusätzlich zu dem Füllstoff eine Kolophonium-Leimung in der Pulpe oder der Beschichtungs-Zusammensetzung verwendet wird.

6. Ein Verfahren nach einem beliebigen vorangehenden Anspruch, bei dem das Wachs eine Mischung aus Paraffinwachs und wenigstens einem niedermolekulargewichtigen synthetischen Wachs ist.

7. Ein Verfahren nach einem der Ansprüche 1 bis 5, bei dem das Wachs eine Mischung aus Paraffinwachs und einem mikro-kristallinen Wachs oder eine Mischung aus Paraffinwachs, einem mikro-kristallinen Wachs und Polyethylenwachs ist.

**Revendications**

1. Un procédé pour la fabrication d'un matériau en papier ou en carton entièrement apprêté dans lequel la charge est ajoutée à la pâte ou incorporée à une solution de couchage ou comprend une charge revêtue de cire, hydrophobe, produite par contact d'un matériau de charge minérale particulaire finement divisé avec une émulsion aqueuse de cire, l'émulsion étant anionique et/ou non ionique.

2. Un procédé selon la revendication 1, dans lequel la cire comprend une cire de paraffine.

3. Un procédé selon la revendication 1 ou 2, dans laquel la matière de charge minérale est du kaolin ou de la craie.

4. Un procédé selon la revendication 1, 2 ou 3, dans lequel la matière de charge est de la craie et l'émulsion de cire est une émulsion anionique/non ionique.

5. Un procédé selon l'une quelconque des revendications précédentes dans lequel on utilise un apprêt colophanique en plus de la charge dans la pâte ou dans la composition de couchage.

6. Un procédé selon l'une quelconque des revendications précédentes, dans lequel la cire est un mélange de cire de paraffine et d'au moins une cire synthètique de bas poids moléculaire.

7. Un procédé selon l'une quelconque des revendications 1 à 5, dans lequel la cire est une mélange de cire de paraffine et de cire microcristalline ou un mélange de cire de paraffine, de cire microcristalline et de cire de polyéthylène.